# EUROPEAN PATENT SPECIFICATION

(11) **EP 0 865 958 B1**
(45) Date of publication and mention of the grant of the patent: **02.11.2000**
(21) Application number: 97830126.5
(22) Date of filing: 19.03.1997
(51) Int. Cl.: B60K 41/00

(54) **Device for the transmission of acceleration and/or braking and/or clutch controls from a vehicle steering wheel**
Vorrichtung zum Weiterleiten von Steuerbefehlen für Gas, Bremsen und/oder Kupplung eines Fahrzeugs
Dispositif pour transmettre des commandes d'accélération, de freinage et/ou d'embrayage à partir du volant d'un véhicule

(43) Date of publication of application: 23.09.1998
(73) Proprietor: GUIDOSIMPLEX s.n.c. di Giancarlo Venturini e C., 00168 Roma (IT)
(72) Inventor: Venturini, Giancarlo, Guidosimplex s.n.c., Via del Podere San Giusto 29, 00168 Roma (IT)
(74) Representative: Iannone, Carlo Luigi

(56) References cited:
- EP-A- 0 634 301
- EP-A- 0 699 552
- FR-A- 2 597 038
- US-A- 4 078 628

## Description

The present invention relates to a device for transmitting acceleration and/or braking and/or clutching controls from the steering wheel of a vehicle.

More specifically, the invention concerns a device of the above kind which allows to transmit the acceleration control, or other kind of electronic control acting on potentiometer without removing the hand from the steering wheel.

As it is well known, since many years always more convenient and reliable devices have been realised to allow to the handicapped people to drive.

In this light, also in view of the problems connected with this kind of users, the search must be directed toward the obtainment of devices allowing the operating of the controls by the maximum operation simplicity and at the same time with the optimum safety conditions.

As to the controls to be operated directly acting on the vehicle steering wheel, particularly with reference to the accelerator and to the brake, many solutions have been suggested, particularly by the same Applicant, concerning solutions providing mechanical and electromechanical devices that allowed in the last years to drive to many people.

However, with the development of the technology, and particularly with the development of electronics, new horizons opened also in this specific field.

In fact, by using electronic devices, it is possible to make much more simple and safe the driving by handicapped people, giving better performances with respect to the ones up to now obtainable.

Obviously, the development of electronic accelerator, brake and clutch devices requires the realisation of control transmission members different with respect to those employed up to now with the mechanical and electromechanical devices.

In this situation, the Applicant has realised and completed a device for the transmission of acceleration and/or braking and/or clutching controls from the steering wheel of a vehicle to be applied below the usual steering wheel, allowing to transmit the users manual controls to the electronic actuators, both for the accelerator and for another member of the vehicle.

The solution suggested according to the present invention further has the main object of allowing the transmission of the controls with the maximum safety conditions in any situation, and having very simple features as to the intervention on the control.

Another object of the present invention is that of providing a solution very easy to be installed and cheap.

These and other results are obtained according to the invention by a device for the transmission of the acceleration and/or braking and/or clutching controls from the steering wheel of a vehicle.

FR-A-2 597 038 describes a device according to the preamble of claim 1.

It is therefore specific object of the present invention a device for transmitting acceleration and/or braking and/or clutching controls from the steering wheel of a vehicle, comprising a wheel element, provided below said steering wheel, an element for fixing to the steering wheel column, and at least a rod - linear bearing assembly, provided between said fixing element and said wheel element, allowing the linear motion of the wheel element, said assembly providing at least an element for transmitting the control to the member to be controlled, characterized in that at least a slidable sector facilitating the grip by the driver is provided on said wheel element.

Particularly, said element for transmitting the control to the member to be controlled is comprised of a potentiometer or of a pressure or depression pneumatic device controlling or assisting the transmission or of a potentiometer controlling an electronic motor.

Preferably, according to the invention said at least one rod linear bearing assembly comprises a rod fixed to said fixing element and a linear bearing coupled to said wheel element and slidable along said rod.

Preferably, two rod - linear bearing assemblies can be provided.

Furthermore, according to the invention, from three to eight rod - linear assembly can be provided, the number of the assemblies not being limitative of the scope of the invention.

Always according to the invention, on said wheel element at least a slidable sector can be provided, particularly a ball sector or an element covering all the wheel element, said sector concentrically rotating with respect to the steering wheel.

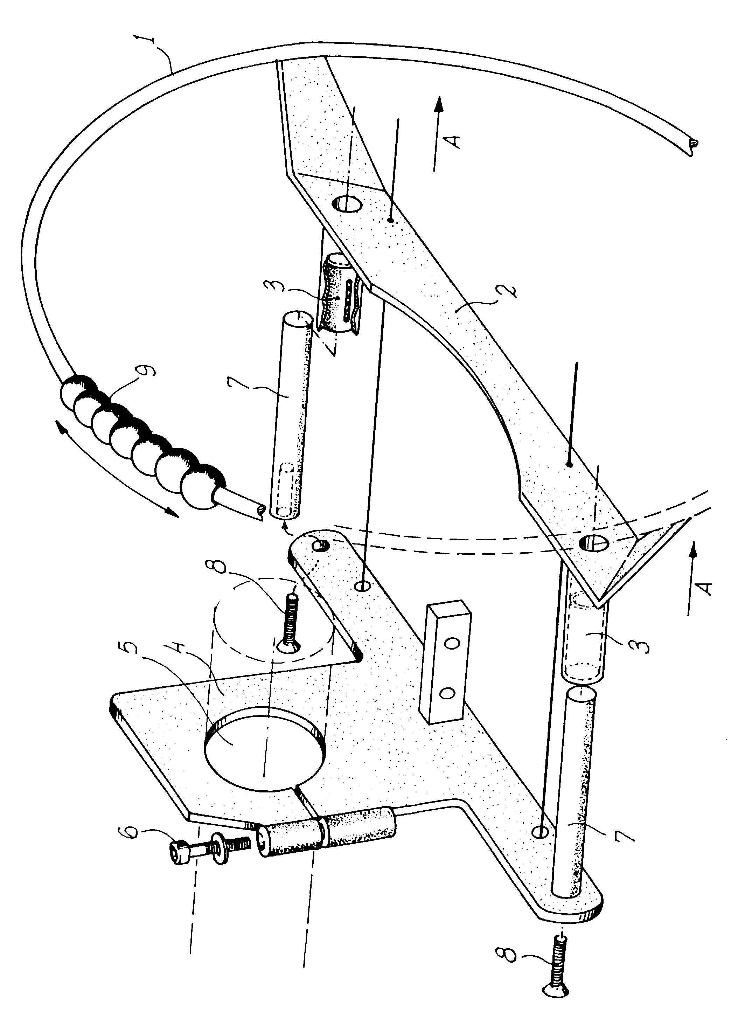

The present invention will be now described, for illustrative but not limitative purposes, according to a preferred embodiment, with particular reference to the figure of the enclosed drawing, wherein it is shown an exploded perspective view of a device according to the invention.

Referring now to the enclosed drawing, a preferred embodiment of the device according to the invention is shown, said device being mounted below the steering wheel (not shown) of the vehicle.

Particularly, the device according to the invention comprises a circular element or wheel 1, placed below said steering wheel, and operated by the driver pulling it along the direction of arrow A in order to obtain for example the acceleration.

Said wheel element 1 provides a transverse element 2 upon which two linear bearings 3, faced opposite with respect to the steering wheel of the vehicle.

The device according to the invention is supported on the steering bar (not shown) by the bracket 4, provided with a hole 5 for the insertion of the steering bar, and with a tightening screw 6.

Two rods 7 are provided on said bracket 4, fixed by screws 8, in the direction toward said steering wheel and upon which said linear bearings are slidingly coupled.

A potentiometer fixed to the plate 4, on the basis of the displacement of the bearing 3 transmits the control to the accelerator or to another kind of control to be operated.

A ball slidable sector 9 is provided on the wheel element 1, said sector facilitating the grip by the driver in any driving step (curve, rectilinear, manoeuvring), so that it is easy, fast and safe the transmission of the desired control.

When for example it is wished to accelerate, the driver will pull the wheel 1, so that the linear bearing 3 slide along the fixed rods 7, thus determining the transmission of the control by the potentiometer (s).

Simply releasing the wheel the opposite motion is obtained.

the ball sector 9 sliding along the wheel 1, which cannot rotate, as already said allows to the driver to firmly grip the wheel and to confer the wished control in any situation.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Device for transmitting acceleration and/or braking and/or clutching controls from the steering wheel of a vehicle, comprising a wheel element (1), provided below said steering wheel, an element (4) for fixing to the steering wheel column, and at least a rod - linear bearing assembly, provided between said fixing element and said wheel element, allowing the linear motion of the wheel element, said assembly providing at least an element for transmitting the control to the member to be controlled, characterized in that at least a slidable sector (9) facilitating the grip by the driver is provided on said wheel element (1).

2. Device according to claim 1, characterised in that said element for transmitting the control to the member to be controlled is comprised of a potentiometer.

3. Device according to claim 1, characterised in that said element for transmitting the control to the member to be controlled is comprised of a pressure or depression pneumatic device controlling or assisting the transmission.

4. Device according to claim 1, characterised in that said element for transmitting the control to the member to be controlled is comprised of a potentiometer controlling an electronic motor.

5. Device according to one of the preceding claims, characterised in that said at least one rod linear bearing assembly comprises a rod fixed to said fixing element and a linear bearing coupled to said wheel element and slidable along said rod.

6. Device according to one of the preceding claims, characterised in that two rod - linear bearing assemblies are provided.

7. Device according to one of the preceding claims, characterised in that from three to eight , or more, rod - linear assembly are provided.

8. Device according to claim 1, characterised in that said at least one slidable sector is comprised of a ball sector or an element covering all the wheel element, said sector concentrically rotating with respect to the steering wheel.

## Patentansprüche

1. Vorrichtung zur Übertragung von Fahrpedal- und/oder Bremse- und/oder Kupplung-Steuerung vom Lenkrad eines Fahrzeugs aus, mit einem unterhalb des vorgenannten Lenkrads angeordneten Radglied (1), einem Glied (4) zur Befestigung an die Lenkradsäule und mit mindestens einer linearen zwischen dem Befestigungsglied und dem Radglied angeordneten Tragestabanordnung, die eine lineare Verstellung des Radglieds gestattet, wobei die vorgenannte Anordnung mindestns ein Glied zur Übertragung der Steuerung and das zu steuernde Teil aufweist, dadurch gekennzeichnet, dass am vorgenannten Radglied (1) mindestens ein gleitbarer Sektor (9) zur Erleichterung des Handgriffs seitens des Fahrers vorgesehen ist.

2. Vorrichtung nach Anspruch 1, dadurch gekennzeichnet, dass das vorgenannte Glied zur Übertragung der Steuerung an das zu steuernde Bestandteil mit einem Potentiometer versehen ist.

3. Vorrichtung nach Anspruch 1, dadurch gekennzeichnet, dass das vorgenannte Glied zur Übertragung der Steuerung an das zu steuernde Bestandteil mit einer pneumatischen Druck- oder Unterdruck vorrichtung zur Steuerung oder Erleichterung der Übertragung versehen ist.

4. Vorrichtung nach Anspruch 1, dadurch gekennzeichnet, dass das vorgenannte Glied zur Übertragung der Steuerung an das zu steuernde Bestandteil mit einem Potentiometer zur Steuerung eines Motors versehen ist.

5. Vorrichtung nach einem der vorhergehenden Ansprüche, dadurch gekennzeichnet, dass die vorgenannte mindestens eine lineare Tragstab-Anordnung einen an das vorgenannte Befestigungsglied gesicherten Stab und einen linearen mit dem vorgenannten Radglied gekuppelten und längs des genannten Stabs gleitbaren Halter aufweist.

6. Vorrichtung nach einem der vorhergehenden Ansprüche, dadurch gekennzeichnet, dass zwei lineare Tragstab-Anordnungen vorgesehen sind.

7. Vorrichtung nach einem der vorhergehenden Ansprüche, dadurch gekennzeichnet, dass drei bis acht oder mehr lineare Tragstab-Anordnungen vorgesehen sind.

8. Vorrichtung nach Anspruch 1, dadurch gekennzeichnet, dass der vorgenannte mindestens ein gleitbarer Sektor einen Kugelsektor oder ein alle Radglieder überdeckendes Glied enthält, wobei der vorgenannte Sektor gegenüber dem Lenkrad konzentrisch drehbar ist.

## Revendications

1. Dispositif pour transmettre des commandes d'accélération, de freinage et/ou d'embrayage à partir du volant d'un véhicule, comprenant un élément à roue (1) placé au dessous dudit élément à roue, un élément (4) pour être fixé à la colonne de direction et au moins une unité de support à barre linéaire, placée entre ledit élément de fixage èpour permettre le déplacement linéaire de l'élément à roue, la dite unité ayant au moins un élément pour transmettre le commande à l'élément à contrôler, caractérisé en ce que sur ledit élément à roue (1) est prévue au moins un secteur coulissant (9) pour faciliter la prise au conducteur du véhicule.

2. Dispositif selon la revendication 1, caractérisé en ce que ledit élément pour transmettre le commande à l'élément à contrôler comprend un potentiomètre.

3. Dispositif selon la revendication 1, caractérisé en ce que ledit élément pour transmettre le commande à l'élément à contrôler comprend un dispositif de pression ou dépression, qui contrôle ou aide la transmission.

4. Dispositif selon la revendication 1, caractérisé en ce que ledit élément pour transmettre le commande à l'élément à contrôler comprend un potentiomètre pour contrôler un électromoteur.

5. Dispositif selon l'une des revendications précédentes, caractérisé en ce que ladite unité de support à barre linéaire comprend une barre fixée audit élément de fixage et un support linéaire coupplé audit élément à zone et coulissant le long de ladite barre.

6. Dispositif selon l'une des revendications précédentes, caractérisé en ce que ils sont prévues deux unités de support à barre linéaire.

7. Dispositif selon l'une des revendications précédentes, caractérisé en ce que ils sont prévues huit ou plus unités de support a barre linéaire.

8. Dispositif selon la revendication 1, caractérisé en ce que ledit au moins un sécteur coulissant comprend un secteur à sphère ou un élément qui recouvre tous les éléments à zone, ledit secteur tournant concentriquement par rapport au volant.
